# EUROPÄISCHE PATENTANMELDUNG

(11) **EP 3 363 522 A1**
(43) Veröffentlichungstag der Anmeldung: **22.08.2018**
(21) Anmeldenummer: 18166810.4
(22) Anmeldetag: 10.12.2013
(51) Int. Cl.: B01D 46/24, F02M 35/02, B01D 46/00, F02M 35/024

(54) **LUFTFILTERSYSTEM, LUFTFILTERELEMENT UND VERFAHREN ZUM AUSTAUSCH EINES LUFTFILTERELEMENTS**

(30) Priorität: 17.12.2012 DE 102012024546
(62) Teilanmeldung aus: 13196469.4
(71) Anmelder: Mann+Hummel GmbH, 71636 Ludwigsburg (DE)
(72) Erfinder: KAUFMANN, Michael, 67149 Meckenheim (DE); RUHLAND, Klaus-Dieter, 67149 Meckenheim (DE)
(74) Vertreter: Seyboth, Matthias

(57) **Zusammenfassung**

Es ist ein Luftfiltersystem, insbesondere für die Ansaugluft von Brennkraftmaschinen, bereitgestellt. Dieses umfasst ein Gehäuse mit einem Gehäuseoberteil und ein rundes Luftfilterelement zum Filtern von Luft, das Gehäuse umfassend einen Reinluftstutzen zur Ableitung von Reinluft aus dem Gehäuse und eine den Reinluftstutzen umgebende, ringförmige, axial zum Innenraum des Gehäuses geöffnete Dichtungsnut zum Eingriff eines ringförmigen, sich axial vom Filterelement erstreckenden Dichtungsstegs, wobei die Dichtungsnut eine zylindrische Anlagefläche aufweist, an welche eine Dichtfläche des Dichtungsstegs insbesondere radial dichtend anlegbar ist, wobei die Dichtungsnut eine der Anlagefläche zugewandte Abstützfläche aufweist, welche mindestens einen von der Abstützfläche in Richtung der Dichtfläche abstehenden Fortsatz aufweist, wobei der Dichtungssteg eine der Dichtfläche gegenüberliegende zweite Fläche aufweist, die ringförmig umlaufend mehrere Einbuchtungen in radialer Richtung aufweist, wobei der mindestens eine Fortsatz in jeweils eine der Einbuchtungen eingreift.

## Beschreibung

### Technisches Gebiet

Die vorliegende Erfindung bezieht sich auf ein Filtersystem umfassend ein Filtergehäuse und Filterelement, welches zum Filtern von Luft verwendbar ist, sowie ein Filterelement und dessen Verwendung für ein solches Filtersystem. Insbesondere betrifft die Erfindung ein Luftfiltersystem sowie ein Luftfilterelement und dessen Verwendung für ein solches Luftfiltersystem, insbesondere für die Ansaugluft von Brennkraftmaschinen.

Filterelemente finden zum Filtern von Fluidströmungen oder gasförmigen Medien Verwendung. Beispielsweise kommen sie bei der Filterung einer Luftströmung zum Einsatz, welche einer Brennkraftmaschine zugeführt wird. Bei dieser ist es notwendig, diese von Schwebstoffen zu befreien. Derartige Luftfilter, beispielsweise für Lastkraftwagen, Baumaschinen, Landmaschinen oder auch Schiffsmotoren, müssen zuverlässig und robust ausgestaltet werden, da sie im Betrieb hohen mechanischen Belastungen ausgesetzt sein können.

Filter haben in der Regel ein Gehäuse mit einem Gehäuseoberteil, wobei in das Gehäuse ein austauschbares Filterelement einbaubar ist. Das Filterelement ist in der Regel rohrförmig aufgebaut und wird mittels einer Dichtung in dem Gehäuse reibschlüssig gehalten.

### Stand der Technik

US 6,599,342 B2 offenbart eine Filteranordnung, bei der ein Filterhalter mindestens eine Durchgangsöffnung aufweist, die zur dichtenden Aufnahme eines mit einem Adapterkragen versehenen Filterelements dient.

Als Dichtung zwischen Gehäuse bzw. Gehäusedeckel und Filterelement wird beispielsweise Schaum aus Polyurethanen (PU), auch PUR-Schaum genannt, verwendet. Solcher Schaum aus Polyurethanen entspannt sich jedoch nach Wärmelagerung (künstliche Lagerung) bzw. hoher Temperatureinwirkung oder Temperaturwechsel.

Anders ausgedrückt, der Schaum aus Polyurethanen ist nach einer Wärmelagerung kräftefrei. Dies führt bei im Gehäuse reibschlüssig gehaltenen Filterelementen immer wieder dazu, dass bei Schwinganregung der Anordnung aus den Teilen Gehäuse mit Gehäuseoberteil, Dichtung und Filterelement größere kritische Bewegungen zwischen den einzelnen Teilen auftreten. Eine solche Schwinganregung kann beispielsweise beim Betrieb eines Kraftfahrzeugs auftreten, in welches der Filter eingebaut ist. Dabei kann es insbesondere zu einer Drehbewegung des Filterelements während des Betriebs kommen, wodurch die Dichtungsmaterialen stark beansprucht werden und es zum Durchtritt von Partikeln kommen kann.

### Offenbarung der Erfindung

Es ist daher Aufgabe der Erfindung, ein verbessertes Luftfiltersystem und ein verbessertes Luftfilterelement zu schaffen.

Diese Aufgabe wird durch ein Luftfiltersystem mit den Merkmalen des Patentanspruchs 1, dem Luftfilterelement zum Einbau in ein solches Luftfiltersystem, insbesondere mit den Merkmalen des Patentanspruchs 7, und dessen Verwendung gemäß Patentanspruch 12 gelöst.

Vorteilhafte weitere Ausgestaltungen des Filterelements sind in den abhängigen Patentansprüchen angegeben.

Demgemäß dient das Luftfiltersystem insbesondere für die Ansaugluft von Brennkraftmaschinen und umfasset ein Gehäuse und mindestens ein Luftfilterelement zum Filtern von Luft. Das Gehäuse umfasst bevorzugt ein Gehäuseoberteil mit einem insbesondere zentralen Reinluftstutzen zur Ableitung von im Luftfilterelement gereinigter Reinluft aus dem Gehäuse und eine bevorzugt als Dichtungsnut ausgebildete Dichtungsregion zum insbesondere formschlüssigen Verbinden mit einer zylindrischen, insbesondere radial wirkenden Dichtung des Luftfilterelements und zum Halten des Luftfilterelements.

Die Dichtungsregion weist bevorzugt eine zylindrische, sich von dem Gehäuseoberteil in den Innenraum des Gehäuses hinein erstreckende Anlagefläche auf, die den Reinluftstutzen umschließt oder umgibt. An diese ist bevorzugt die Dichtung des Luftfilterelements mit einer Dichtfläche radial dichtend anlegbar. Die Anlagefläche kann dabei auch axial zum Reinluftstutzen versetzt angeordnet sein.

In einer Ausführungsform ist die Dichtungsnut eine den Reinluftstutzen umgebende, ringförmige, axial zum Innenraum des Gehäuses geöffnete Dichtungsnut. Diese dient zum Eingriff eines ringförmigen, sich axial vom Filterelement erstreckenden Dichtungsstegs, wobei die Dichtungsnut eine zylindrische Anlagefläche aufweist, an welche eine Dichtfläche des Dichtungsstegs insbesondere radial dichtend anlegbar ist. Ferner weist die Dichtungsnut eine bevorzugt der Anlagefläche zugewandte Abstützfläche auf, welche mindestens einen von der Abstützfläche in Richtung der Dichtfläche abstehenden Fortsatz aufweist. Weiter bevorzugt weist der Dichtungssteg eine der Dichtfläche gegenüberliegende zweite Fläche auf, die ringförmig umlaufend mehrere Einbuchtungen in radialer Richtung aufweist, wobei der mindestens eine Fortsatz in jeweils eine der Einbuchtungen eingreift.

Fortsatz und Einbuchtungen sind bevorzugt derart korrespondierend ausgebildet, dass die Einbuchtung den Fortsatz formschlüssig umschließt.

Auf diese Weise kann in einer kompakten Bauform die Lage des Filterelements ohne zusätzliche Teile so gesichert werden, dass im Betrieb ein Rotieren des Filterelements unterbleibt. Da diese Mittel am Gehäuseoberteil im Bereich des Reinluftstutzens angeordnet sind, kann weiter vorteilhaft auch bei rotatorisch festgelegtem Filterelement der Gehäusedeckel noch gedreht werden, wenn er schon aufgesetzt aber noch nicht endgültig befestigt ist. Dadurch wird es dem Bediener erleichtert, nach einem Filterelementwechsel den Deckel unabhängig in seiner Position auszurichten. Dies ist insbesondere dann von Vorteil, wenn eine im Deckel angeordnete Staubaustragsöffnung senkrecht nach unten in Schwerkraftrichtung auszurichten ist, um einen zuverlässigen Staubaustrag zu gewährleisten.

In einer Ausführungsform ist die Anlagefläche der Dichtungsnut zylindrisch und beispielsweise radial außen oder innen in der Dichtungsnut angeordnet. Bevorzugt ist die Abstützfläche ebenfalls zylindrisch oder konisch, beispielsweise mit sich in Richtung des Gehäuseinnenraums vergrößerndem Durchmesser ausgebildet. Eine zylindrische Form kann eine radiale Abstützwirkung zur Unterstützung der radialen Dichtwirkung optimieren, eine konische Form kann die beim Filterwechsel auftretenden Bedienkräfte reduzieren.

Der oder die Fortsätze an der Abstützfläche können beispielsweise die Form eines Zylinderabschnittes aufweisen, dessen Mittelachse außerhalb der Abstützfläche und im Wesentlichen parallel zur Mittelachse des Gehäuses verlaufen. Alternativ dazu denkbar ist die Form von abgerundeten, sich im Wesentlichen parallel zur Mittelachse des Gehäuses erstreckenden, dreieckigen Prismen.

Ein Luftfilterelement zum lösbaren Einbau in ein Gehäuse eines erfindungsgemäßen Luftfiltersystems umfasst bevorzugt einen ringförmigen, sich axial vom Filterelement erstreckenden Dichtungssteg, der so ausgebildet ist, dass er in die gehäuseseitige Dichtnut mit einer Anlagefläche und einer dieser gegenüberliegenden Abstützfläche eingreifen kann. Der Dichtungssteg weist dabei bevorzugt eine radial dichtend an die Anlagefläche der Dichtungsnut anlegbare Dichtfläche und ferner eine der Dichtfläche gegenüberliegende zweite Fläche mit mehreren ringförmig umlaufend voneinander beabstandet angeordneten Einbuchtungen auf. Die Einbuchtungen sind dabei bevorzugt so ausgestaltet, dass sie, wenn das Luftfilterelement im Gehäuse eingebaut ist, einen von der Abstützfläche der Dichtnut in Richtung der Anlagefläche abstehende Fortsatz insbesondere formschlüssig umschließen können.

Die zweite Fläche des Dichtungssteges ist bevorzugt so angepasst, dass sie an der Abstützfläche radial abstützbar ist.

In einer bevorzugten Ausführungsform sind die Einbuchtungen regelmäßig voneinander beabstandet in der zweiten Fläche angeordnet. Auf diese Weise kann das Luftfilterelement in all jenen Positionen in das Gehäuse eingebaut werden, in welchen eine der Einbuchtungen mit dem Fortsatz oder den Fortsätzen korrespondiert. Dabei ist bevorzugt eine Vielzahl von Einbuchtungen, bevorzugt 10 oder mehr, vorgesehen, so dass das Filterelement in 10 oder mehr Drehpositionen montierbar ist. Beim Einsetzen des Filterelements kann so eine richtige Position durch eine kleine Drehbewegung gefunden werden.

In einer Ausführungsform sind die Einbuchtungen und/oder der Fortsatz/die Fortsätze im Wesentlichen in Form eines Zylinderabschnittes ausgebildet, dessen Mittelachse radial außerhalb des Dichtungssteges bzw. der Abstützfläche liegt und im Wesentlichen parallel zur Mittelachse des Filterelements bzw. des Gehäuses verläuft. Für den Fall, dass die Abstützfläche bzw. die zweite Fläche konisch ausgebildet sind, verlaufen die Mittelachsen von Fortsätzen bzw. Einbuchtungen bevorzugt im Wesentlichen parallel zur Mantelfläche des Konus.

In einer Ausführungsform sind die Einbuchtungen und/oder der Fortsatz/die Fortsätze im Wesentlichen in Form von abgerundeten, sich im Wesentlichen parallel zur Mittelachse des Luftfilterelements erstreckenden, drei- oder mehreckigen Prismen ausgeführt, deren Erstreckungsrichtung (Verschiebungsrichtung) im Wesentlichen parallel zur Mittelachse des Filterelements bzw. des Gehäuses verläuft. Für den Fall, dass die Abstützfläche bzw. die zweite Fläche konisch ausgebildet sind, verlaufen die Erstreckungsrichtungen (Verschiebungsrichtungen) von Fortsätzen bzw. Einbuchtungen bevorzugt entsprechend im Wesentlichen parallel zur Mantelfläche der Prismen. Die dreieckige Grundform kann durch starke Abrundungen der Spitzen und der Übergangsbereiche zur Abstützfläche in eine runde, wie oben beschriebene Form übergehen.

Die zylindrische Form der Dichtfläche kann bevorzugt als runder Zylinder, insbesondere als Kreiszylinder, elliptischer Zylinder oder ovaler Zylinder ausgebildet sein. Die Form bildet dabei bevorzugt den äußeren Umfang des Luftfilterelements nach. Es kann jedoch auch eine mehreckige, insbesondere rechteckige Form gewählt werden.

Das Luftfilterelement ist bevorzugt als Rundfilterelement ausgebildet, welches einen zickzackförmig gefalteten, ringförmig geschlossenen Filterbalg umfasst, der einen zentralen Innenraum umschließt. Der Filterbalg ist an seinen axialen Enden mit Endscheiben abgedichtet, wobei eine Endscheibe eine zentrale, ringförmige Einström- oder Ausströmöffnung aufweist, an der die Dichtung zur Trennung von Roh- und Reinseite angeordnet ist. Das Luftfilterelement kann jedoch auch zwei zickzackförmig gefaltete, ringförmig geschlossenen Filterbälge aufweisen, die ineinander angeordnet sind und so miteinander verbunden sind, dass der eine Filterbalg radial von außen nach innen durchströmbar ist und der andere Filterbalg radial von innen nach außen durchströmbar ist. Denkbar ist auch ein Luftfilterelement mit in Strömungsrichtung verlaufenden Kanälen, die dadurch gebildet werden, dass abwechselnd eine glatte Filtermedienlage und eine gewellte Filtermedienlage aufeinander gelegt sind und die dazwischen gebildeten Kanäle wechselseitig verschlossen werden.

Als Filtermedium kann jeweils ein flaches, poröses Filtermedium verwendet werden, zum Beispiel einzelne Lagen oder Kombinationen von Zellulosemedien, Glasfasermedien, Vliese aus schmelzgeblasenen oder gesponnenen Kunststofffasern.

In einer Ausführungsform ist die Dichtungsnut durch eine den Reinluftstutzen ringförmig umschließende Aussparung oder Nut im Gehäuse, insbesondere im Gehäuseoberteil, gebildet.

In einer Ausführungsform ist die Dichtfläche durch eine zylindrische, radial innere oder äußere Wand der Aussparung oder Nut gebildet.

Bevorzugt ist am Gehäuse eine radial nach außen weisende Anlagefläche, insbesondere für das Luftfilterelement vorgesehen.

Bevorzugt wird das Filterelement im Gehäuse axial im Bereich seiner geschlossenen Bodenendscheibe vom Deckel abgestützt und in Position gehalten.

Bevorzugt ist im Gehäuse ein luftdurchlässiges Mittelrohr zum radialen Abstützen des auswechselbaren Filterelements angeordnet und bevorzugt unlösbar mit dem Gehäuse verbunden, beispielsweise im Bereich des Reinluftstutzens. Das Mittelrohr ist radial innerhalb des Filterelements angeordnet, um dieses bei einer Durchströmung radial von außen nach innen zu stabilisieren.

Die Erfindung betrifft ferner ein Luftfilterelement zum lösbaren Einbau in ein Gehäuse eines insbesondere erfindungsgemäßen Luftfiltersystems, wobei das Luftfilterelement eine Dichtung zum Halten des Luftfilterelements an dem Gehäuse und zum Abdichten eines Raums zwischen dem Luftfilterelement und dem Gehäuseoberteil umfasst, wenn das Luftfilterelement in dem Gehäuse lösbar eingebaut ist, wobei die Dichtung mit der Dichtungsnut des Gehäuseoberteils formschlüssig verbindbar ist.

Der Formschluss erfolgt vorzugsweise in radialer Richtung, d.h. ein Teil der einen Komponente, bevorzugt des Gehäuses, beispielsweise der Fortsatz, greift radial in das andere Teil, bevorzugt das Luftfilterelement, ein. Dadurch wird eine formschlüssige Verbindung erreicht, die eine drehende Bewegung des Filterelements in dem Dichtsitz erschwert.

Das Filterelement ist vorzugsweise ein Luftfilterelement, beispielsweise zum Filtern von Verbrennungsluft für eine Brennkraftmaschine. Die Erfindung kann jedoch auch insgesamt bei Flüssigkeitsfiltern, z. B. Ölfiltern oder Kraftstofffiltern Verwendung finden.

Die Dichtung ist vorzugsweise zumindest teilweise oder vollständig aus einer Vergussmasse, zum Beispiel einem insbesondere geschäumten PUR-Material, gefertigt. Insbesondere sind die Dichtung und/oder die Materialien des Filterelements oder des Gehäuse für Betriebstemperaturen zwischen -30 °C und 90 °C ausgestaltet. Bevorzugt ist die Dichtung einstückig mit einer Endscheibe aus gleichem Material hergestellt. Weiter bevorzugt ist die Endscheibe aus der Vergussmasse hergestellt und wird beim Vergießen mit dem Filterbalg dichtend verbunden.

Außerdem kann die Dichtung mindestens ein Versteifungselement zum Versteifen der Dichtung aufweisen.

Der Dichtungssteg der genannten Luftfilterelemente kann sich beispielsweise entweder von einer Endfläche einer Filtermedienkonstruktion, beispielsweise der Stirnfläche eines ringförmig geschlossenen, sternförmig gefalteten Filtermedienbalgs oder einer dort angeordneten Endscheibenkonstruktion, axial hinweg erstrecken. Der Dichtungssteg kann jedoch auch durch eine ein stirnseitiges, axiales Ende eines ringförmig geschlossenen, sternförmig gefalteten Filtermedienbalgs abschließende Endscheibenkonstruktion selbst gebildet sein. Damit können Dichtfläche und zweite Fläche entweder axial außerhalb des Bereichs des Filtermediums oder in einem Bereich, der das Filtermedium zumindest teilweise noch umgibt, angeordnet sein.

Bei den erfindungsgemäßen Dichtungen dient die zweite Fläche des Dichtungsstegs dazu, einen Anpressdruck auf die insbesondere radial innen angeordnete Dichtfläche zu erzeugen, wenn das Filterelement in dem Gehäuse montiert wird oder montiert ist. Dies zweite Fläche des Dichtungssteges stützte sich dabei bevorzugt radial an der beispielsweise ringförmigen Abstützfläche der Dichtungsnut ab. Die Einbuchtungen, die nicht mit einem Fortsatz in Eingriff stehen, reduzieren den Druck bzw. mechanischen Widerstand, der bei der Montage des Filterelements wahrnehmbar ist. Daher ist es bevorzugt, das an der Abstützfläche eine geringere Anzahl an Fortsätzen vorgesehen ist, als am Filterelement Einkerbungen vorgesehen sind. Besonders bevorzugt ist nur ein Fortsatz vorgesehen.

Die Erfindung betrifft ferner ein Verfahren zum Austausch eines Luftfilterelements in einem erfindungsgemäßen Luftfiltersystem, bei welchem das Gehäuse geöffnet wird, insbesondere durch Lösen eines Gehäuseunterteils vom Gehäuseoberteil, anschließend ein insbesondere erfindungsgemäßes Luftfilterelement aus dem Gehäuse entnommen wird und daran anschließend ein insbesondere erfindungsgemäßes Luftfilterelement in das Gehäuse montiert wird, derart, dass der Dichtungssteg mit der Dichtungsnut des Gehäuseoberteils formschlüssig verbunden wird.

Beim Einbau wird die Dichtung des Filterelements angesetzt und falls eine Einbuchtung nicht bereits mit dem Fortsatz korrespondiert, leicht gedreht, bis sie vollständig in die Dichtungsnut einschiebbar ist. Bein Einschieben legt sich die Dichtfläche des Dichtsteges radial dichtend an der korrespondierenden Anlagefläche des Gehäuses an.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert.

### Kurze Beschreibung der Zeichnungen

Es zeigt dabei:
Fig. 1 eine dreidimensionale, geschnittene Ansicht eines Luftfilters gemäß eines ersten Ausführungsbeispiels;
Fig. 2 eine Detailansicht einer Variante des Luftfilters von Fig. 1;
Fig. 3 eine dreidimensionale Detailansicht des Filterelements gemäß eines ersten Ausführungsbeispiels;
Fig. 4 eine Detailansicht eines Filterelements gemäß eines zweiten Ausführungsbeispiels.

In den Figuren sind gleiche oder funktionsgleiche Elemente, sofern nichts anderes angegeben ist, mit denselben Bezugszeichen versehen.

### Ausführungsform(en) der Erfindung

Die Erfindung ist nachfolgend anhand eines Filters für die Verbrennungsluft einer Brennkraftmaschine, wie beispielsweise für ein Kraftfahrzeug, beschrieben. Entsprechende Filterelemente können anstelle einer Filterung von Luft beispielsweise zur Filterung eines anderen gasförmigen oder auch eines flüssigen Mediums, wie beispielsweise Öl, ausgestaltet sein.

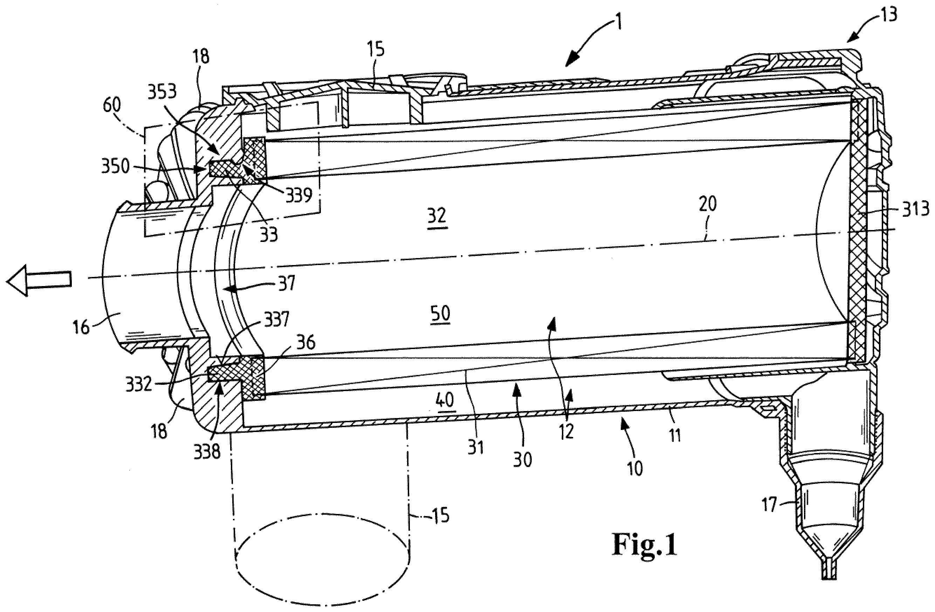

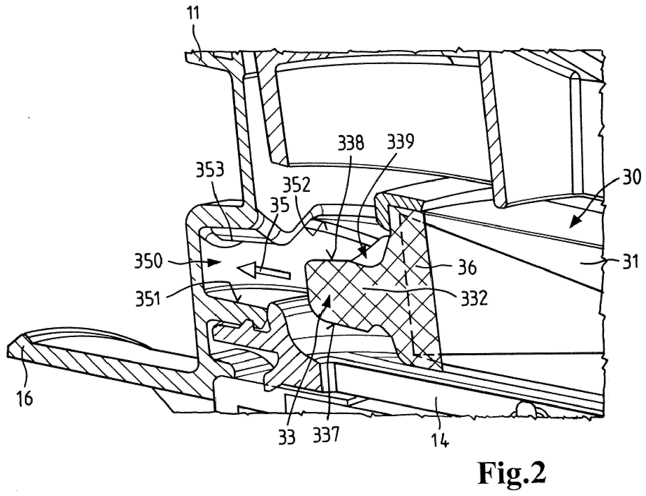

Die in den Figuren gezeigten Ausführungen dienen insbesondere für die Filtration von Ansaugluft von Brennkraftmaschinen und umfassen ein Gehäuse und mindestens ein Luftfilterelement zum Filtern von Luft. Wie in Fig. 1 und 2 gezeigt, umfasst der Filter 1 gemäß des ersten Ausführungsbeispiels ein Gehäuse 10 mit einem Gehäuseoberteil 11, das mit einem Gehäuseunterteil (Deckel) 13 verbunden ist. Fig 2. zeigt dabei im Detail eine Variante des in Fig. 1 mit 60 bezeichneten Ausschnittes. Das Gehäuse 10 ist in Fig. 1 also ein zweiteiliges Gehäuse 10. Das Gehäuseunterteil 13 ist beispielsweise mit Klammern an dem Gehäuseoberteil 11 gehalten. An dem Gehäuseoberteil 11 ist ein Rohluftstutzen 15 angeordnet, mit welchem Rohluft, ungereinigte Luft in das Gehäuse 10 eingeleitet werden kann. In der gezeigten Schnittansicht ist der Bereich mit der Einströmöffnung abgeschnitten und somit nicht sichtbar. Es kann ein Rohluftstutzen mit radialer oder tangentialer Einströmung realisiert werden. An dem Gehäuseoberteil 11 ist zudem ein Reinluftstutzen 16 angeordnet, mit welchem Reinluft, von Verunreinigungen gereinigte Luft, in der durch den weißen Blockpfeil gezeigten Strömungsrichtung aus dem Gehäuse 10 ausgeleitet werden kann. An dem Gehäuseunterteil 13 ist ein Austragsventil 17 angeordnet, mit welchem Partikel, die in der Rohluft enthalten waren, aus dem Gehäuse 10 ausgeleitet werden können. Es können jedoch auch aktive Absaugungen vorgesehen sein. Das Gehäuse 10 hat an dem Gehäuseoberteil 11 und dem Gehäuseunterteil 13 mehrere Rippen 18, die beispielsweise zur Versteifung des Gehäuses 10 bzw. des Gehäuseoberteils 11 oder des Gehäuseunterteils 13 dienen. Der Übersichtlichkeit halber sind in Fig. 1 nicht alle Rippen 18 mit einem Bezugszeichen versehen. In dem Gehäuse 10 ist ein Filterelement 30 zum Filtern von Luft eingebaut. Im Gehäuse 10 ist ein Mittelrohr 14 angeordnet, welches hohlzylindrisch und gitterförmig ausgebildet ist, so dass es radial von durch das Filterelement 30 gefilterter Luft durchströmbar ist. Das Mittelrohr 14 ist bevorzugt an einem axialen Ende im Gehäuse 10 im Bereich des Reinluftstutzens 16 befestigt, beispielsweise wie in Fig. 1 und 2 gezeigt mittels einer Schnappverbindung, die bevorzugt unlösbar bzw. nicht zerstörungsfrei lösbar ausgebildet ist. Das Filterelement 30 umgibt im eingebauten Zustand das Mittelrohr 14. Im Betrieb kann das Mittelrohr 14 das Filterelement 30 radial abstützen und ein Kollabieren bei zu hohem Differenzdruck am Filterelement 30 verhindern.

Das Gehäuse 10 umfasst eine bevorzugt als Dichtungsnut 350 ausgebildete Dichtungsregion zum insbesondere formschlüssigen Verbinden mit einer zylindrischen, insbesondere radial wirkenden Dichtung 33 des Luftfilterelements 30 und zum Halten des Luftfilterelements 30. Die Dichtungsregion 350 weist bevorzugt eine zylindrische, sich von dem Gehäuseoberteil in den Innenraum des Gehäuses hinein erstreckende Anlagefläche 351 (Fig. 2) auf, die den Reinluftstutzen 16 umschließt. An diese ist die Dichtung 33 des Luftfilterelements 30 mit einer Dichtfläche 337 radial dichtend anlegbar. Die Anlagefläche kann wie in den Figuren 1 und 2 gezeigt auch axial zum Reinluftstutzen versetzt angeordnet sein.

In der gezeigten Ausführungsform ist die Dichtungsnut 350 eine den Reinluftstutzen umgebende, ringförmige, axial zum Innenraum des Gehäuses geöffnete Dichtungsnut. Diese dient zum Eingriff eines ringförmigen, sich axial vom Filterelement erstreckenden Dichtungsstegs 332, wobei die Dichtungsnut 350 radial innen die zylindrische Anlagefläche 351 aufweist, an welche die Dichtfläche 337 des Dichtungsstegs radial dichtend anlegbar ist. Ferner weist die Dichtungsnut eine der Anlagefläche zugewandte, d.h. radial außen angeordnete Abstützfläche 352 auf, welche mindestens einen von der Abstützfläche 352 in Richtung der Anlagefläche 351 abstehenden Fortsatz 353 aufweist. Der Dichtungssteg weist besonders bevorzugt eine der Dichtfläche 337 gegenüberliegende zweite Fläche 338 auf, die ringförmig umlaufend mehrere Einbuchtungen 339 in radialer Richtung aufweist, wobei der mindestens eine Fortsatz in jeweils eine der Einbuchtungen eingreifen kann, wenn das Filterelement in Einbaurichtung 35 seine axiale Endposition im Gehäuse 10 erreicht hat. Fortsatz 353 und Einbuchtungen 339 sind derart korrespondierend ausgebildet, dass die Einbuchtung den Fortsatz formschlüssig umschließt. Dabei bilden die Einbuchtungen 339 bevorzugt die Form des Fortsatzes 353 nach, im Falle einer elastischen Dichtungsmasse für die Dichtung 33, beispielsweise aus Polyurethan, können die Einbuchtungen 339 mit einem leichten Übermaß derart ausgeführt sein, dass sie beim Einbau durch den gehäuseseitigen Fortsatz 353 leicht verpresst werden. Auf diese Weise kann in einer kompakten Bauform die Lage des Filterelements 30 ohne zusätzliche Teile so gesichert werden, dass im Betrieb ein Rotieren des Filterelements 30 unterbleibt. Da diese Mittel zur Rotationsverhinderung am Gehäuseoberteil 11 im Bereich des Reinluftstutzens angeordnet sind, kann weiter vorteilhaft auch bei rotatorisch festgelegtem Filterelement 30 der Gehäusedeckel 13 noch gedreht werden, wenn er schon aufgesetzt aber noch nicht endgültig befestigt ist. Dadurch wird es dem Bediener erleichtert, nach einem Filterelementwechsel den Deckel 13 unabhängig in seiner Position auszurichten. Dies ist insbesondere dann von Vorteil, wenn eine im Deckel angeordnete Staubaustragsöffnung 17 senkrecht nach unten in Schwerkraftrichtung auszurichten ist, um einen zuverlässigen Staubaustrag zu gewährleisten.

Wie in Figur 2 gezeigt ist die Anlagefläche 351 der Dichtungsnut 350 bevorzugt zylindrisch und radial innen in der Dichtungsnut angeordnet. Die Abstützfläche 352 ist ebenfalls zylindrisch und bevorzugt wie gezeigt leicht konisch, mit sich in Richtung des Gehäuseinnenraums 12 vergrö-ßerndem Durchmesser ausgebildet. Die konische Form kann die beim Filterwechsel auftretenden Bedienkräfte reduzieren.

Der Fortsatz 353 an der Abstützfläche 352 ist beispielsweise wie gezeigt in Form eines abgerundeten, sich im Wesentlichen parallel zur Mittelachse 20 des Gehäuses 10 bzw. der Anlagefläche 351 erstreckenden, dreieckigen Prismas ausgeführt. Die in die Dichtungsnut 350 hineinragende Spitze wie auch die Übergänge in die Abstützfläche 352 sind abgerundet. Aus der Figur 2 wird deutlich, dass die dreieckige Grundform durch starke Abrundungen der Spitzen und der Übergangsbereiche zur Abstützfläche 352 in eine runde Form eines Zylinderabschnittes übergehen.

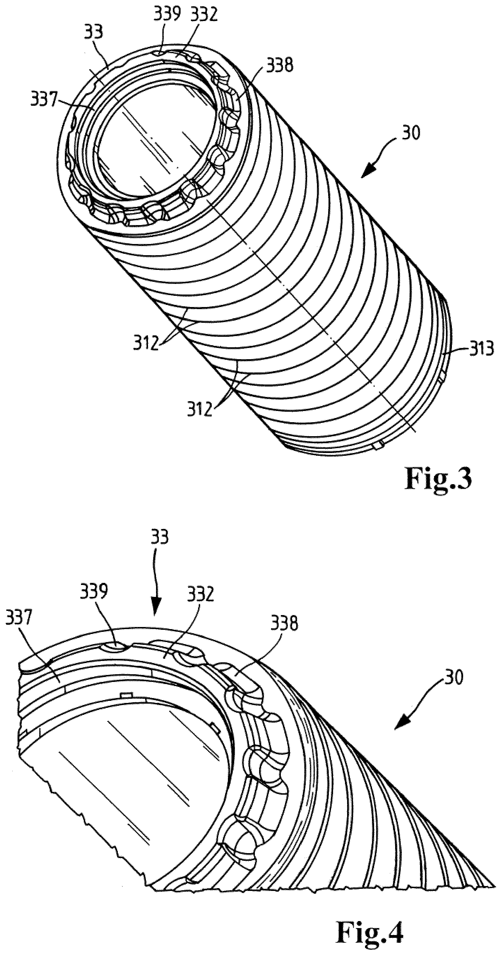

Das Luftfilterelement 30 zum lösbaren Einbau in das Gehäuse 10 des gezeigten Filters 1 umfasst einen ringförmigen, sich axial vom Filterelement erstreckenden Dichtungssteg 332, der so ausgebildet ist, dass er in die gehäuseseitige Dichtungsnut 350 mit der Anlagefläche 351 und der dieser gegenüberliegenden Abstützfläche 352 eingreifen kann. Der Dichtungssteg 33 weist dabei bevorzugt wie in Fig. 2 - 4 gezeigt eine radial dichtend an die Anlagefläche 351 der Dichtungsnut 350 anlegbare Dichtfläche 337 und ferner eine der Dichtfläche gegenüberliegende zweite Fläche 338 mit mehreren ringförmig umlaufend voneinander beabstandet angeordneten Einbuchtungen 339 auf. Die Einbuchtungen sind dabei bevorzugt und wie gezeigt so ausgestaltet, dass sie wenn das Luftfilterelement 30 im Gehäuse 10 eingebaut ist einen von der Abstützfläche 352 der Dichtnut 350 in Richtung der Anlagefläche 351 abstehende Fortsatz 353 insbesondere formschlüssig umschließen können. Die zweite Fläche 338 des Dichtungssteges 332 ist dabei wir gezeigt bevorzugt so angepasst, dass sie an der Abstützfläche 352 radial abstützbar ist. Die Einbuchtungen 339 sind bevorzugt wie gezeigt regelmäßig voneinander beabstandet in der zweiten Fläche 338 angeordnet. Auf diese Weise kann das Luftfilterelement 30 in all jenen Positionen in das Gehäuse 10 eingebaut werden, in welchen eine der Einbuchtungen 339 mit dem Fortsatz 353 korrespondiert. Dabei ist bevorzugt eine Vielzahl von Einbuchtungen, bevorzugt 10 oder mehr, vorgesehen, beispielsweise wie aus Fig. 3 ersichtlich 13 Stück. Auf diese Weise ist das Filterelement in 10 oder mehr Drehpositionen montierbar. Beim Einsetzen des Filterelements 30 in Einbaurichtung 35 kann so eine richtige Position durch eine kleine Drehbewegung gefunden werden.

Wie in Fig. 2 - 4 angedeutet sind die Einbuchtungen 339 und/oder der Fortsatz 353 im Wesentlichen in Form von abgerundeten, sich im Wesentlichen parallel zur Mittelachse des Luftfilterelements erstreckenden, drei- oder mehreckigen Prismen ausgeführt, deren Erstreckungsrichtung (Verschiebungsrichtung) im Wesentlichen parallel zur Mittelachse 20 des Filterelements 30 bzw. des Gehäuses 10 verläuft. Für den Fall, dass die Abstützfläche 352 bzw. die zweite Fläche 338 konisch ausgebildet sind, verlaufen die Erstreckungsrichtungen (Verschiebungsrichtungen) von Fortsätzen bzw. Einbuchtungen bevorzugt entsprechend im Wesentlichen parallel zur Mantelfläche der Prismen.

Die Einbuchtungen 339 und/oder der Fortsatz 353 kann alternativ im Wesentlichen in Form eines Zylinderabschnittes ausgebildet, dessen Mittelachse radial außerhalb des Dichtungssteges 332 bzw. der Abstützfläche 352 liegt und im Wesentlichen parallel zur Mittelachse 20 des Filterelements 30 bzw. des Gehäuses 10 verläuft. Für den Fall, dass die Abstützfläche 352 bzw. die zweite Fläche 338 konisch ausgebildet sind, verlaufen die Mittelachsen von Fortsätzen bzw. Einbuchtungen bevorzugt im Wesentlichen parallel zur Mantelfläche des Konus.

Die zylindrische Form der Dichtfläche 337 kann bevorzugt als runder Zylinder, insbesondere als Kreiszylinder, elliptischer Zylinder oder ovaler Zylinder ausgebildet sein. Die Form bildet dabei bevorzugt den äußeren oder inneren Umfang des Luftfilterelements nach, beispielsweise auch mit radialem Abstand vom Umfang, wie in Fig. 2 - 4 gezeigt. Es kann jedoch auch eine mehreckige, insbesondere rechteckige Form gewählt werden.

Das Luftfilterelement 30 ist bevorzugt und in allen Figuren ersichtlich als Rundfilterelement ausgebildet, welches einen zickzackförmig gefalteten, ringförmig geschlossenen Filterbalg 31 umfasst, der einen zentralen Innenraum 32 umschließt. Der Filterbalg 31 ist an seinen axialen Enden mit Endscheiben 36, 313 abgedichtet, wobei die offene Endscheibe 36 eine zentrale, ringförmige Ausströmöffnung 37 aufweist, an der die Dichtung 33 zur Trennung von Roh- 40 und Reinseite 50 angeordnet ist. Als Filtermedium für den Filterbalg 31 ist jeweils ein flaches, poröses Filtermedium verwendet, zum Beispiel einzelne Lagen oder Kombinationen von Zellulosemedien, Glasfasermedien, Vliese aus schmelzgeblasenen oder gesponnenen Kunststofffasern.

Das Luftfilterelement 30 zum lösbaren Einbau in das Gehäuse 10 des Luftfiltersystems ist bevorzugt an der offenen Endscheibe 36 mittels der Dichtung 33 an dem Gehäuse gehalten dichtet so im Gehäuse die Rohseite 40 von der Reinseite 50 ab, wobei die Dichtung 33 mit dem Dichtungssteg 332 mit der Dichtungsnut 350 des Gehäuseoberteils 11 formschlüssig verbindbar ist.

Der Formschluss erfolgt vorzugsweise in radialer Richtung, d.h. ein Teil der einen Komponente, bevorzugt des Gehäuses, greift radial in das andere Teil, bevorzugt das Filterelement, beispielsweise greift wie in Fig. 1 - 2 abgebildet der Fortsatz 353 in eine der Einbuchtungen 339 ein, welche folglich den Fortsatz umschließt. Dadurch wird eine formschlüssige Verbindung erreicht, die eine drehende Bewegung des Filterelements in dem Dichtsitz erschwert.

Die Endscheiben 36, 313 sind vorzugsweise zumindest teilweise oder vollständig aus einer Vergussmasse, zum Beispiel einem insbesondere geschäumten PUR-Material, gefertigt. Insbesondere ist die Dichtung 33 bzw. der Dichtungssteg 332 einstückig und materialeinheitlich mit der offenen Endscheibe 36 ausgebildet.

Bei den in den Figuren gezeigten Dichtungen 33 dient die zweite Fläche 338 des Dichtungsstegs 332 dazu, einen Anpressdruck auf die insbesondere radial innen angeordnete Dichtfläche 337 zu erzeugen, wenn das Filterelement 30 in dem Gehäuse 10 montiert wird oder montiert ist. Die zweite Fläche 338 des Dichtungssteges 332 stützt sich dabei bevorzugt radial an der Abstützfläche 352 der Dichtungsnut 350 ab. Die Einbuchtungen 339, die nicht mit einem Fortsatz in Eingriff stehen, reduzieren den Druck bzw. mechanischen Widerstand, der bei der Montage des Filterelements wahrnehmbar ist. Daher ist es bevorzugt, dass an der Abstützfläche eine geringere Anzahl an Fortsätzen vorgesehen ist, als am Filterelement Einkerbungen vorgesehen sind. Besonders bevorzugt ist wie in den Figuren gezeigt nur ein Fortsatz vorgesehen.

Zum Austausch eines Luftfilterelements 30 in einem Luftfiltersystem 1, wird das Gehäuse 10 geöffnet, insbesondere durch Lösen eines Gehäuseunterteils oder Deckels 13 vom Gehäuseoberteil 11, anschließend ein Luftfilterelement 30 dem Gehäuse entnommen wird und daran anschließend ein neues Luftfilterelement 30 in das Gehäuse 10 montiert, derart, dass der Dichtungssteg 332 mit der Dichtungsnut 350 des Gehäuseoberteils formschlüssig verbunden wird. Dabei wird die Dichtung 33 des Filterelements 30 angesetzt und falls eine Einbuchtung 339 nicht bereits mit dem Fortsatz 350 korrespondiert, leicht gedreht, bis sie vollständig in die Dichtungsnut 350 einschiebbar ist. Bein Einschieben legt sich die Dichtfläche 337 des Dichtsteges 332 radial dichtend an der korrespondierenden Anlagefläche 351 des Gehäuses 10 an.

Fig. 3 zeigt ein Filterelements 30 zur Verwendung in einem erfindungsgemäßen Luftfiltersystem gemäß einem Ausführungsbeispiel in einer dreidimensionalen Gesamtansicht. Das Filterelement 30 ist in Fig. 3 ein hohlzylindrischer Körper, der an seinem Außenumfang mehrere Klebefäden 312 zur Faltenstabilisierung aufweist, die der Übersichtlichkeit halber in Fig. 3 nicht alle mit einem Bezugszeichen versehen sind. Unten in Fig. 3 ist das Filterelement 30 durch einen Bodenendscheibe 313 abgeschlossen. An dem dem Bodenendscheibe 313 gegenüberliegenden Ende des Filterelements 30 ist die Dichtung 33 angeordnet. Die Dichtung 33 hat einen Dichtungssteg 332 mit einer radial wirkenden Dichtfläche 337 auf der Innenseite und eine zweite Fläche 338 des Dichtungsstegs 332. Die Dichtung 33 weist an der zweiten Fläche 338 eine Vielzahl von Einbuchtungen 339 auf, die der Übersichtlichkeit halber nicht alle mit einem Bezugszeichen versehen sind. Die Einbuchtungen 339 sind entlang des Umfangs des Dichtungsstegs 332 nebeneinander angeordnet. Fig. 4 zeigt die Form der Dichtung 33 mit den Auskerbungen 339 in vergrößertem Detail.

Bei der Dichtung 33 dient die Dichtungsaußsenseite 338 bevorzugt dazu, einen Anpressdruck auf die Dichtfläche zu erzeugen, wenn das Filterelement 30 in Einbaurichtung 35 in dem Gehäuse 10 montiert wird oder montiert ist. Die Einbuchtungen 339 reduzieren den Druck bzw. mechanischen Widerstand, der bei der Montage wahrnehmbar ist und dienen zum formschlüssigen Umschließen eines gehäuseseitigen Fortsatzes.

Alle zuvor beschriebenen Ausführungsbeispiele des Filters 1, des Filterelements 30 und des Gehäuses 10 können einzeln oder in allen möglichen Kombinationen Verwendung finden. Hierbei sind insbesondere folgende Modifikationen denkbar.

Es sind andere als die dargestellten und beschriebenen Geometrien und Abmessungen für das Filterelement 30 wählbar, soweit die Gegebenheiten am Einbauort des Filterelements 30 zu berücksichtigen sind und ein lösbarer, haptisch wahrnehmbarer Einbau des Filterelements 30 in dem Gehäuse 10 möglich ist.

Als Material für die Dichtung 33 kann auch statt Polyurethan eine unter Wärmeeinwirkung aushärtende und/oder aufquellende Klebefolie zum Einsatz kommen. Die Anzahl der Einbuchtungen 339 an der Dichtung 33 ist geeignet wählbar.

## Patentansprüche

1. Luftfiltersystem (1), insbesondere für die Ansaugluft von Brennkraftmaschinen, umfassend ein Gehäuse (10) mit einem Gehäuseoberteil (11) und ein rundes Luftfilterelement (30) zum Filtern von Luft, das Gehäuse umfassend einen Reinluftstutzen (16) zur Ableitung von Reinluft aus dem Gehäuse (10) und einen den Reinluftstutzen umgebenden, ringförmigen, axial zum Innenraum des Gehäuses geöffneten Aufnahmebereich zum Eingriff einer ringförmigen, am axialen Ende des Filterelements angeordneten radial wirkenden Dichtung, wobei der Dichtungsbereich eine zylindrische Anlagefläche aufweist, an welche eine Dichtfläche der Dichtung insbesondere radial dichtend anlegbar ist, wobei der Aufnahmebereich eine der Anlagefläche zugewandte Abstützfläche aufweist, welche mindestens einen von der Abstützfläche in Richtung der Anlagefläche abstehenden Fortsatz aufweist, wobei die Dichtung eine der Dichtfläche gegenüberliegende zweite Fläche aufweist, die ringförmig umlaufend mehrere Einbuchtungen in radialer Richtung aufweist, wobei der mindestens eine Fortsatz in jeweils eine der Einbuchtungen eingreift.

2. Luftfiltersystem nach Anspruch 1, wobei der Aufnahmebereich als Dichtungsnut und/oder die Dichtung als Dichtungssteg ausgebildet ist.

3. Luftfiltersystem nach Anspruch 1, wobei die Anlagefläche insbesondere zylindrisch radial außen oder innen in der Dichtungsnut angeordnet ist.

4. Luftfiltersystem nach einem der vorhergehenden Ansprüche, wobei die Anlagefläche zylindrisch ausgebildet ist.

5. Luftfiltersystem nach einem der vorhergehenden Ansprüche, wobei die Abstützfläche zylindrisch oder konisch mit sich in Richtung des Gehäuseinnenraums vergrößerndem Durchmesser ausgebildet ist.

6. Luftfiltersystem nach einem der vorhergehenden Ansprüche, wobei die zweite Fläche des Dichtungssteges an der Abstützfläche radial abgestützt ist.

7. Luftfiltersystem nach einem der vorhergehenden Ansprüche, wobei der mindestens eine Fortsatz oder die Fortsätze die Form eines Zylinderabschnittes aufweisen, dessen Mittelachse außerhalb der Abstützfläche und im Wesentlichen parallel zur Mittelachse des Gehäuses verläuft.

8. Luftfiltersystem nach einem der Ansprüche 1 - 7, wobei die Fortsätze in Form von abgerundeten, sich im Wesentlichen parallel zur Mittelachse des Gehäuses erstreckenden, dreieckigen Prismen ausgeführt sind.

9. Luftfilterelement (30) zum lösbaren Einbau in ein Gehäuse (10) eines Luftfiltersystems nach einem der vorhergehenden Ansprüche, wobei das Luftfilterelement (30) einen ringförmigen, sich axial vom Filterelement erstreckenden Dichtungssteg (332) zum Eingriff in eine gehäuseseitige Dichtnut mit einer Anlagefläche und einer dieser gegenüberliegenden Abstützfläche (352) umfasst, wobei der Dichtungssteg eine radial dichtend an die Anlagefläche der Dichtungsnut anlegbare Dichtfläche aufweist, wobei der Dichtungssteg eine der Dichtfläche gegenüberliegende zweite Fläche mit mehreren ringförmig umlaufend voneinander beabstandet angeordneten Einbuchtungen aufweist, mit welchen ein von der Abstützfläche der Dichtnut in Richtung der Anlagefläche abstehende Fortsatz insbesondere formschlüssig umschließbar ist.

10. Luftfilterelement nach dem vorhergehenden Anspruch, wobei die zweite Fläche des Dichtungssteges an der Abstützfläche radial abstützbar ist.

11. Luftfilterelement nach einem der beiden vorhergehenden Ansprüche, wobei die Einbuchtungen regelmäßig voneinander beabstandet in der zweiten Fläche angeordnet sind.

12. Luftfilterelement nach einem der drei vorhergehenden Ansprüche, wobei die Einbuchtungen im Wesentlichen die Form eines Zylinderabschnittes aufweisen, dessen Mittelachse außerhalb des Dichtungssteges liegt und im Wesentlichen parallel zur Mittelachse des Filterelements ist.

13. Luftfilterelement nach einem der Ansprüche 9 - 12, wobei die Fortsätze in Form von abgerundeten, sich im Wesentlichen parallel zur Mittelachse des Luftfilterelements erstreckenden, dreieckigen Prismen ausgeführt sind.

14. Verwendung eines Luftfilterelements nach einem der Ansprüche 9 - 13 in einem Luftfiltersystem nach einem der Ansprüche 1 - 8.
